## Europäisches Patentamt

## European Patent Office

## Office européen des brevets

(11) Publication number: **0 202 269**
**B1**

## EUROPEAN PATENT·SPECIFICATION

(45) Date of publication of patent specification: **25.01.89**

(51) Int. Cl.⁴: **G 01 N 21/64**

(21) Application number: **85905623.6**

(22) Date of filing: **04.11.85**

(86) International application number:
**PCT/EP85/00592**

(87) International publication number:
**WO 86/03004 22.05.86 Gazette 86/11**

(54) ANALYTICAL APPARATUS FOR OPTICALLY DETERMINING SPECIES IN SOLUTION.

(30) Priority: **06.11.84 CH 5306/84**

(43) Date of publication of application:
**26.11.86 Bulletin 86/48**

(45) Publication of the grant of the patent:
**25.01.89 Bulletin 89/04**

(84) Designated Contracting States:
**BE CH DE FR GB IT LI NL**

(56) References cited:
**EP-A-0 054 292**
**WO-A-84/00817**
**US-A-3 947 088**

(73) Proprietor: **PRUTEC LIMITED**
**142 Holborn Bars**
**London EC1N 2NH (GB)**

(72) Inventor: **RINGROSE, Anthony**
**126, chemin de la Montagne**
**CH-1224 Chêne-Bougeries/Geneva (CH)**
Inventor: **SUTHERLAND, Ranald, M.**
**32, rue du 31 décembre**
**CH-1207 Geneva (CH)**
Inventor: **DÄHNE, Claus**
**103, avenue du Bois-de-la-Chapelle**
**CH-1213 Onex/Geneva (CH)**
Inventor: **PLACE, John, F.**
**42, chemin de la Chevillarde**
**CH-1208 Geneva (CH)**

(74) Representative: **Dousse, Blasco et al**
**7, route de Drize**
**CH-1227 Carouge/Genève (CH)**

EP 0 202 269 B1

Courier Press, Leamington Spa, England.

## Description

The present invention concerns an analytical apparatus for optically determining species in solution, more especially for determining bioactive species by reactions of the immunoassay type.

Analytical apparatuses comprising optical fiber probes which can optically monitor the adsorption of chemical species on the fiber core are known. This technique is based on the immersion of a lit optical wave guide, for instance an optical fiber without cladding, in a test solution the refractive index of which is lower than that of the fiber core, whereby an interaction takes place between the evanescent wave component of the beam travelling along the guide and some species in solution to be determined. This approach is particularly interesting for monitoring events in the reaction space in close vicinity to the fiber, i.e. within reach of the envanescent wave component (a few tenths or hundredths of angströms), this being in the case of tests based on the reaction of a first partner in a complexation reaction, this partner being adsorbed or coated on the probe surface, with a second partner dissolved in the sample solution.

Apparatuses suitable for such types of measurements have been recently disclosed in the following references WO84/00817; USP 4,447,546 (Hirschfeld et al); GB 2,103,786 (ICI); J. D. Andrade et al. Applied optics 23 (11) 1984, 1812—1815.

In the apparatuses of the prior art, the light probe (optical fiber the cladding of which has been at least partly removed) is connected (coupled) by its proximal end to an optical excitation-detection arrangement comporting generally a light source providing an excitation signal of wavelength $\lambda_1$, a beam splitter mirror separator to direct the signal into the proximal end of the fiber and a photodetector oriented at an angle with the source for receiving the test signal returned from the fiber, the beam splitter mirror effecting the separation between incident and returned light signals.

In the preferred approaches of the prior-art, the return signal is a fluorescent signal generated by some component of the species under reaction with a wavelength $\lambda_2$ longer than $\lambda_1$. Therefore the beam splitter mirror is preferably a dichroic mirror, i.e. a low pass interference filter with cut-off frequency between the maximum absorption and maximum fluorescence back emission of the fluorophore of interest. This arrangement allows a rather clean separation between the two signals.

Regarding now the probe itself, this is generally constituted by a piece of optical fiber deprived from its normal low refractive index cladding. This probe is generally coated with a film of one of the reactive species involved in an immunotype reaction, e.g. an antibody specific to an antigen to be analyzed. When the lit probe is immersed in the test solution, the antigen reacts on the fiber surface to provide an immunotype complex capable of generating a fluorescence signal when excited by the evanescent wave component, this signal being returned to the detector via the fiber and the optical coupling system. A perturbing signal (noise) may however be produced from the interaction of the excitation signal exiting from the fiber end and the bulk of the analyte and to avoid this drawback the fiber tip has been either blackened or made fully reflective. In the first case, both the incident signal and the forward generated signal are absorbed with consequent decreased response and in the second case both the incident and fluorescent signals are returned to the separator with consequent relative high noise to signal ratio.

The present invention as defined in claim 1 remedies this situation. In order to disclose it in more detail, reference is made to the annexed drawing.

Figure 1 is a diagrammatic representation of an analytical instrument according to the invention.

Figure 2 is an enlarged cross-sectional view of a detail, i.e. the coupling means between the probe and the remainder of the optical fiber.

Figure 3 is a cross-sectional view of the probe tip with one embodiment of means to filter out the incident signal and reflect the test signal.

Figure 4 is a cross-sectional view of another embodiment of such means.

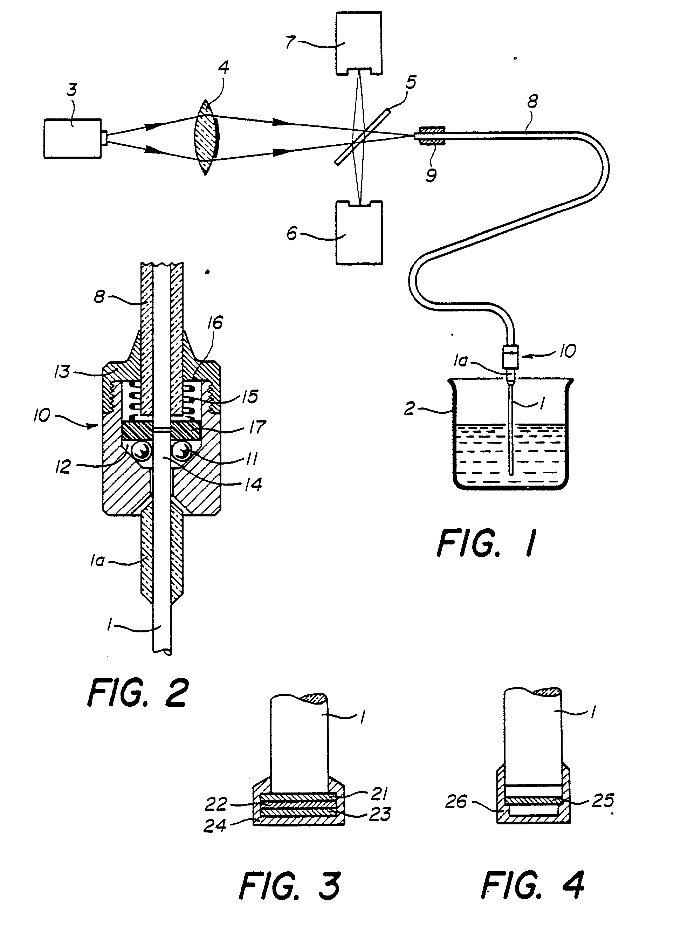

The apparatus represented in Figure 1 comprises essentially a probe 1 to be immersed in a container 2 containing an analyte solution. The probe 1 is a piece of optical fiber of which the cladding has been removed on nearly its full extent; a small portion designated 1a still has the cladding not removed for mechanical coupling convenience as seen later.

The lower unclad portion of the fiber dipping in the sample liquid is coated with a layer of a reactive material susceptible to bind with the analyte dissolved in the sample to be analyzed in container 2, thus providing a complex on the surface of the guide which will fluoresce at wavelength $\lambda_2$ (test signal).

The present apparatus further comprises an optical elements arrangement comprising a light source 3, focussing means 4, a beam separating means 5, a test signal detector 6, a reference signal detector 7 and a section of flexible optical fiber 8 held by positioning means 9 in proper optical position relative to the focussing means for receiving the excitation signal at wavelength $\lambda_1$ from source 3 and at a proper angle for ensuring propagation by multiple reflection along the fiber 8. The elements 3 to 8 have been disclosed in the prior art in detail (see the aforementioned references) and need not be further detailed here; suffice to say that the detectors 6 and 7 are normally suitably connected to circuitry for processing the detected signals, amplifying, discriminating and calculating results in the form of electric signals to be displayed as readouts on suitable display means, all such technology being well known from people skilled in the art.

The flexible fiber element 8 is coupled to the probe by coupling means 10 shown in more details on Figure 2. Such means comprise essentially three balls 11 (only two are shown) housed in a frusto-conically shaped recess 12 of a coupler

frame 13 and exerting a pinching action on the probe proximal end 14 by virtue of the action of a compression spring 15 resting on an inner upper wall 16 of the recess 12 and pressing against the balls 11 via a plastic ring 17. Probe 1 is therefore easily detachable by pulling off the coupler and interchangeably replaceable by a fresh one when used up after one analytical operation.

In order to return the forward signal $\lambda_2$ generated by the fluorescing of the reactants on the probe surface ("forward" means the direction toward the probe tip) a dichroic mirror is provided at the distal end of fiber 1 as shown in Figure 3. This dichroic mirror comprises three layers of transparent materials 21, 22, 23 having suitable refractive indexes to filter out the incident wavelength $\lambda_1$ and freely pass the test signal wavelength $\lambda_2$. The manner in which to select the material with suitable refractive indexes is well known (se for instance Applied optics and optical Engineering, Editor R. Kingslake, Vol. 1, pages 316—322, Academic Press, New-York). The mirror further comprises a metallic fully reflective back layer 24 (for instance of polished aluminum) which will reflect the $\lambda_2$ signal backwards into the probe and from there back to the detector 6.

In another embodiment (Figure 4) the distal end of the probe comports an optical filter of a substance capable of selectively absorbing the signal at wavelength $\lambda_1$ and freely passing the test signal at wavelength $\lambda_2$. The arrangement is completed, like in the previous embodiment, by a polished fully reflective metallic mirror 26. Narrow band filters of the type used in this embodiment are well known and available commercially from optical components manufacturers.

The operation of the present apparatus can be described briefly as follows:

The probe 1 bare section is first coated with a reactive component susceptible to selectively bind some kind of analyte to be tested. In addition, in case the obtained complex does not fluoresce by itself, fluorescent labelling is provided in connection with either one or the other of the reactants, being provided however that no fluorescence (or only reduced fluorescence) is produced in the absence of the desired immunoreaction product.

Then the coated probe, after suitable rinsing and drying, is connected to the flexible section 8 by means of the coupler 10. The optical components 3 to 7 and the additional electronics are turned on and the lit probe is immersed into the container 2 containing the analyte to be determined by the specific aforementioned reaction on the probe surface.

When the reaction proceeds a fluorescence test signal of wavelength $\lambda_2$ is generated at the probe surface by the interaction of the excitation light evanescent component of wavelength $\lambda_1$ and the analyte complex layer. The backward component of the test signal is directly returned along the fiber toward the detector 6 via fiber 8, and splitter 5 whereas the forward component first reaches the distal end of the fiber where it is back reflected by the mirror 24, 26 after traversing the fitering section (see Figures 3 and 4) inserted between the fiber tip and the mirror. Simultaneously, the unwanted excitation component travelling forward is eliminated by absorption. This technique enables to improve the signal to noise ratio at the detector 6 and enables to increase sensitivity with a given light intensity input or to reduce the input energy without sacrificing sensitivity.

The operation of the computation and display circuitry conforms with the disclosures of the prior art and needs not be further developped here.

It is noted that when the present instrument is operated for making immune type analysis, there is no compulsory need to first obtain the liquid to be analyzed as a sample stored in a laboratory container, as for instance when a blood sample is first taken from a patient. Thus, the probe of the present instrument can be directly introduced, in situ, into the bloodstream of the patient or, if not possible, into a by-pass circuit temporarily connected, for instance during surgery. Indeed the probe of the apparatus of the invention is constituted by optical and mechanical elements of sufficiently small size to be used directly in such tests with only a minimum of discomfort for the patient.

## Claims

1. An immunoassay analytical instrument comprising an optical fiber probe coupled to an optical system comprising an excitation signal source, a test signal detector and a beam separating means for splitting said test signal at wavelength $\lambda_2$ from said excitation signal at wavelength $\lambda_1$, said fiber being coated with a bioreactive reactant capable of specifically binding to an analyte dissolved in a sample of solution to provide an immunoassay type complex, whereby a fluorescent test signal is generated by interaction of said excitation signal injected into said probe and said complex, said test signal being reflectively returned backwards via the mirrored tip of the probe, the coupler and the separating means to the detector to be collected thereby providing the desired analytical information, characterized in that the probe fiber tip is provided with means to block the incident signal and selectively pass and return to the detector the test signal.

2. The analytical instrument of claim 1, wherein the means to reflect the test signal and to block $\lambda_1$ and pass $\lambda_2$ consists of a dichroic filtering mirror placed at the tip of the probe.

3. The analytical instrument of claim 1, wherein the means to block $\lambda_1$ and pass $\lambda_2$ consists in an optical absorption filter interposed between the fiber end and said mirrored tip of the probe.

4. The analytical instrument of claim 1, further comprising between said probe and said system a section of flexible optical fiber, said probe being detachably connected thereto by means of a plug type snap-on connector coupler.

5. The analytical instrument of claim 4, wherein the snap-on connector consists of a hollow plug permanently fitted to one end of said section of flexible fiber, said plug having a distal opening for inserting the free end of the probe and, held in a recess of said plug in communication with said opening, a spring and ball pinching device acting on the proximal bare end of the probe for retaining it in optically coupled position with said flexible section.

## Patentansprüche

1. Analysevorrichtung für immunologische Untersuchungen, bestehend aus einer optischen Fasersonde, die an ein optisches System gekoppelt ist, das aus einer Erregungssignalquelle, einem Testsignaldetektor und einem strahlenzerlegenden Bauteil zum Trennen des Testsignals einer Wellenlänge $\lambda_2$ vom dem Erregungssignal der Wellenlänge $\lambda_1$ besteht, wobei die Faser mit einem bioreaktiven Reaktionsmittel beschichtet ist, das befähigt ist, sich spezifisch mit einem Analyten zu verbinden, der in einer Probenlösung gelöst ist, um einen für immunologische Untersuchungen typischen Komplex zu bilden, wobei durch Wechselwirkung zwischen dem Erregungssignal, das der Sonde aufgedrückt wird, und diesem Komplex ein fluoreszierendes Testsignal erzeugt wird, wobei das Testsignal über die verspiegelte Spitze der Sonde, die Kupplung und das Trennbauteil zum Sammeln reflektierend auf den Detektor zurückgeworfen wird, wodurch es die gewünschte analytische Information liefert, dadurch gekennzeichnet, daß die Fasersondenspitze mit Mitteln zum Blockieren des Einfallssignals und zum selektiven Hindurchlassen und Zurücksenden des Testsignals zu dem Detektor versehen ist.

2. Analysevorrichtung nach Anspruch 1, wobei die Mittel zum Reflektieren des Testsignals und zum Blockieren von $\lambda_1$ und zum Hindurchlassen von $\lambda_2$ aus einem an der Spitze der Sonde angebrachten dichroitischen Filterspiegel bestehen.

3. Analysevorrichtung nach Anspruch 1, wobei die Mittel zum Blockieren von $\lambda_1$ und zum Hindurchlassen von $\lambda_2$ aus einem optischen Absorptionsfilter bestehen, das zwischen dem Faserende und der verspiegelten Sodenspitze befindlich ist.

4. Analysevorrichtung nach Anspruch 1, weiterhin bestehend aus einem flexiblen optischen Faserabschnitt zwischen der Sonde und dem System, wobei die Sonde mit diesem Abschnitt mittels einer steckerförmigen einrastenden Kupplung lösbar verbunden ist.

5. Analysevorrichtung nach Anspruch 4, wobei die einrastende Verbindung aus einem hohlen Stecker besteht, der ständig auf ein Ende des flexiblen Faserabschnittes aufgesetzt ist, wobei der Stecker am entgegengesetzten Ende eine Öffnung zum Einsetzen des freien Endes der Sonde aufweist und wobei in einer Ausnehmung des Steckers eine in Kommunikation mit der Öffnung gehaltene, aus einer Feder und Kugeln bestehende Klemmvorrichtung vorgesehen ist, die auf das nahegelegene Ende der Sonde einwirkt, um sie in optisch gekoppelter Position mit dem flexiblen Abschnitt zu halten.

## Revendications

1. Instrument d'immuno-analyse comportant une sonde à fibre optique couplée à un système optique lequel comprend une source d'un signal d'excitation, un détecteur d'un signal analytique et des moyens de séparation dudit signal analytique de longueur d'onde $\lambda_2$ d'avec ledit signal d'excitation de longueur d'onde $\lambda_1$, ladite fibre étant revêtue d'un bioréactif capable de fixer de manière spécifique un analyte dissous dans un échantillon de solution en formant avec celui-ci un complexe de type immunologique de façon qu'un signal analytique de fluorescence soit alors engendré en raison d'une interaction entre ledit signal d'excitation injecté dans ladite sonde et ledit complexe, ledit signal analytique étant réfléchi et renvoyé par l'intermédiaire de la pointe de la sonde et des moyens de couplage et de séparation pour être recueilli par le détecteur et ainsi fournir le résultat d'analyse recherché, caractérisé en ce que la pointe de la sonde à fibre optique est équipée de moyens propres à arrêter le signal incident et à ne sélectivement transmettre et renvoyer au détecteur que le signal analytique.

2. L'instrument d'analyse de la revendication 1, dans lequel les moyens pour arrêter $\lambda_1$ et transmettre $\lambda_2$ sont constitués par un miroir dichroïque filtrant placé à la pointe de la sonde.

3. L'instrument d'analyse de la revendication 1, dans lequel les moyens pour arrêter $\lambda_1$ et transmettre $\lambda_2$ sont constitués par un filtre d'absorption intercalé entre l'extrémité de la fibre et la pointe de la sonde, celle-ci comportant un miroir.

4. L'instrument d'analyse de la revendication 1, comportant encore, disposée entre ladite sonde et ledit système, une portion de fibre optique souple à laquelle la sonde est reliée de façon amovible par l'intermédiaire d'une prise à pression.

5. L'instrument d'analyse de la revendication 4, dans lequel la prise à pression consiste en une prise creuse fixée intégralement à l'une des extrémités de la portion de fibre optique souple, ladite prise comportant une ouverture distale dans laquelle on introduit le bout libre de la sonde et, encastré dans un logement de ladite prise communiquant avec ladite ouverture, un dispositif de serrage à billes et à ressort agissant sur l'extrémité proximale nue de la sonde de manière que celle-ci soit maintenue en place couplée optiquement avec ladite portion de fibre souple.

FIG. 1

FIG. 2

FIG. 3

FIG. 4